# EUROPEAN PATENT SPECIFICATION

(11) **EP 0 689 149 B1**
(45) Date of publication and mention of the grant of the patent: **22.08.2001**
(21) Application number: 95304351.0
(22) Date of filing: 21.06.1995
(51) Int. Cl.: G06K 7/08, G06K 19/00

(54) **Non-contacting information cards**
Berührungslose Informationskarten
Cartes d'information sans contact

(30) Priority: 21.06.1994 JP 13884794
(43) Date of publication of application: 27.12.1995
(73) Proprietor: SONY CHEMICALS CORPORATION, Tokyo (JP)
(72) Inventor: Yanagibori, Susumu, Kanuma-shi, Tochigi (JP); Fujimoto, Masahiro, Kanuma-shi, Tochigi (JP); Orihara, Katsuhisa, Kanuma-shi, Tochigi (JP); Saitoh, Shoshichi, Kanuma-shi, Tochigi (JP)
(74) Representative: Cotter, Ivan John

(56) References cited:
- EP-A- 0 289 136
- US-A- 5 202 838
- PATENT ABSTRACTS OF JAPAN, unexamined applications, P field, vol. 17, no. 505, September 10, 1993 THE PATENT OFFICE JAPANESE GOVERNMENT page 58 P 1611; & JP-A-05 128 319 (MITSUBISHI ELECTRIC CORP.)

## Description

This invention relates to non-contacting information cards. More particularly, but not exclusively, the invention relates to such cards which can be used as commuter's tickets, management cards for animals and lift tickets for a skiing ground and which can transmit and receive information to and from a card reader/writer by radio waves.

Non-contacting information cards which can transmit and receive information, such as an identification (ID) number, expiry data and the number of times used, between the card and a card reader/writer via radio waves, have recently been used as commuter's tickets, management cards for animals and lift tickets for a skiing ground, for example.

While the non-contacting information cards have heretofore been operated by a battery, as for example taught by Japanese Patent application JP-A-5-128 319, in order to reduce the thickness of the non-contacting information card and to facilitate management of the non-contacting information cards it has been proposed, in for example European patent application EP-A-0 289 136, that non-contacting information cards not be operated by batteries but, instead, that they be operated by a voltage which results from rectifying a carrier signal used to transmit information from the card reader/writer.

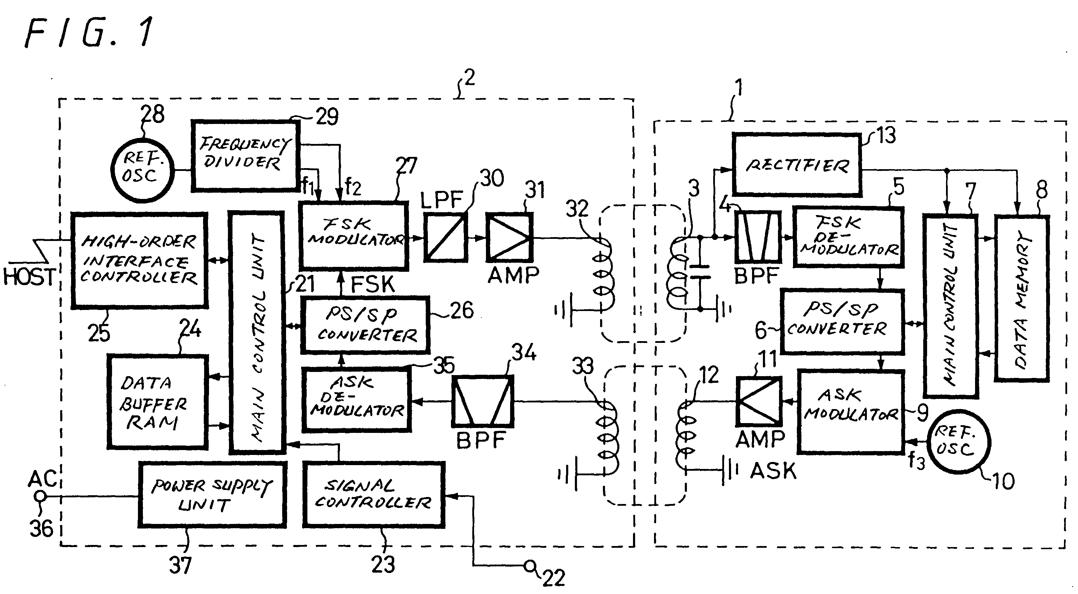

FIG. 1 of the accompanying drawings shows an example of an information card system using a non-contacting information card which is not operated by a battery. This information card system will be described below with reference to FIG. 1.

As shown in FIG. 1, the information card system comprises a non-contacting information card 1 and a card reader/writer 2 for transmitting and receiving information between it and the non-contacting information card 1 via radio waves.

As shown in FIG. 1, the card reader/writer 2 includes a main control unit 21 comprising a CPU (central processing unit), a signal input terminal 22, a signal controller 23, a data buffer RAM (random-access memory) 24 and a high-order interface controller 25. Transmission information from the main control unit 21 is supplied through a PS/SP (parallel-to-serial/serial-to-parallel) converter 26, which converts information supplied thereto in parallel form to serial form, to a FSK (frequency shift keying) modulator 27.

The FSK modulator 27 outputs a frequency f₁ of 320 kHz, for example, when a digital signal is at a high ("1") level and outputs a frequency f₂ of 280 kHz, for example, when the digital signal is at a low ("0") level. The card reader/writer 2 includes a reference oscillator 28 and a frequency divider 29 which divides a reference signal supplied thereto from the reference oscillator 28 to obtain signals with the frequencies f₁ and f₂.

The output signal from the FSK modulator 27 is supplied through a low-pass filter (LPF) 30 and an amplifier (AMP) 31 to a coil 32 which forms a write head.

As shown in FIG. 1, the card reader/writer 2 includes a coil 33 that forms a read head. An ASK (amplitude shift keying) signal obtained at the coil 33 is supplied through a band-pass filter (BPF) 34 to an ASK demodulator 35. A demodulated signal from the ASK demodulator 35 is converted from serial to parallel data form by the PS/SP converter 26 and then supplied to the main control unit 21.

Further, a voltage from a commercially-available power source is supplied to an AC input terminal 36 and from there to a power supply unit 37. The power supply unit 37 supplies a regulated DC voltage which is used as an operation voltage to operate the card reader/writer 2.

The non-contacting information card 1 includes a resonant circuit 3 having a resonance frequency f₀ of 300 kHz, for example, for reading out the FSK signal supplied thereto from the coil 32 forming the write head. The FSK signal from the resonant circuit 3 is supplied through a band-pass filter (BPF) 4 to an FSK demodulator 5. Information provided in the form of a digital signal obtained at an output side of the FSK demodulator 5 is supplied through a PS/SP converter 6, which converts the information from serial to parallel data form, to a main control unit 7 formed by a CPU.

The main control unit 7 supplies a memory 8 with data, such as a read command signal and a memory information signal. Therefore, data is written in or stored data is read out from the data memory 8 under the control of the main control unit 7.

The digital signal, which is the information signal read out from the data memory 8, is supplied to the main control unit 7. The digital signal, which is the information signal read out from the data memory 8 under the control of the main control unit 7, is converted from parallel to serial data form by the PS/SP converter 6 and then supplied to an ASK modulator 9. The non-contacting information card 1 further includes an oscillator 10 which supplies a carrier signal having a frequency f₃, e.g. of 300 kHz, to an ASK modulator 9.

An ASK signal of the information signal obtained at the output side of the ASK modulator 9 after the information signal has been read out from the data memory 8 is supplied through an amplifier (AMP) 11 to a coil 12 which transmits the ASK signal to the coil 33 forming the read head of the card reader/writer 2 by electromagnetic coupling.

In the example shown in FIG. 1, the FSK signal received by the resonant circuit 3 is supplied to a rectifier 13 and a DC voltage obtained at the output side of the rectifier 13 is used as an operation voltage to operate the non-contacting information card 1.

Since the non-contacting information card 1 is not provided with a battery, it can be of reduced thickness and becomes more useful from an administration standpoint.

Power for driving the non-contacting information card 1 is transmitted from the card reader/writer 2 in the form of an electromagnetic or radio wave. Therefore, if the positional relationship between the resonant circuit 3 and the coil 32 which forms the write head of the card reader/writer 2 is always constant, the voltage induced in the resonant circuit 3 is always constant.

However, in actual practice, when the non-contacting information card 1 is in use, the non-contacting information card 1 can be moved in a predetermined area that is provided as an operation area in which the card 1 can come near or away from the coil 32 forming the write head of the card reader/writer 2. The information card 1 can be located randomly within this operation area. Therefore, when the card 1 is located nearest the coil 32 of the card reader/writer 2, an excess voltage is induced in the resonant circuit 3 of the card 1 so that the rectifier 13 outputs an excess voltage. Thus, in worst cases, there is the risk that an IC (integrated circuit) chip or the like disposed in the non-contacting information card 1 will be destroyed by the excess voltage.

In order to prevent the IC chip or the like from being destroyed by the excess voltage, it has been proposed that the non-contacting information card 1 incorporate a constant voltage controller of a serial control type in association with the rectifier 13 to dissipate excess voltage as heat when the output voltage of the rectifier 13 increases in excess of a predetermined value. An example of such an arrangement is disclosed in US Patent Serial Number 5, 202, 838 in which a power consuming circuit is provided at the output of a rectifier circuit. The power consuming circuit has a switching element which is sequentially controlled by a micro computer which operates to select one of a plurality of power consuming resistance circuits to control the power consumption.

However, in this case, the constant voltage controller which treats the excess voltage as heat is considerably complicated in circuit arrangement and also occupies a relatively large area of the IC chip of the non-contacting information card 1. As a consequence, the non-contacting information card becomes expensive.

According to an aspect of the present invention, there is provided a non-contacting information card including a resonant circuit for receiving a carrier signal modulated on the basis of information supplied thereto from a card reader/writer, information processing means for obtaining information from said carrier signal, and rectifier means for rectifying said carrier signal to provide a voltage at an output side thereof for operating the non-contacting information card, characterised in that the resonant circuit comprises a variable capacity element and a resonant frequency of the resonant circuit can be varied by varying the capacity of the variable capacitive element in response to a voltage at the output side of the rectifier means thereby to make the voltage at the output side of the rectifier means substantially constant.

Preferably, the variable capacitive element is formed of a vari-cap diode and the vari-cap diode is reverse biased by a voltage obtained at the output side of the rectifier means.

According to an embodiment of the invention described hereinbelow, a voltage obtained in the resonant circuit by electromagnetic coupling increases so that, when a power supply voltage obtained at the output side of the rectifier means increases, the capacity of the variable capacitive element changes, e.g. decreases, and the resonance frequency of the resonance circuit changes, e.g. increases. Therefore, the voltage that is obtained in the resonant circuit by the electromagnetic coupling decreases, making it possible to make the power supply voltage obtained at the output side of the rectifier means substantially constant.

The preferred embodiment of the invention provides: a non-contacting information card of a relatively simple arrangement in which an IC chip or the like can be prevented from being destroyed by an excess voltage; and a non-contacting information card which can be made inexpensive.

The invention will now be further described, by way of illustrative and nonlimiting example, with reference to the accompanying drawings, in which:
FIG. 1 is a schematic block diagram of an information card system which uses a non-contacting information card;
FIG. 2 is a schematic block diagram of a non-contacting information card according to an embodiment of the present invention; and
FIG. 3 is a characteristic graph of frequency versus amplitude response and to which reference will be made in explaining operation of the non-contacting information card shown in FIG. 2.

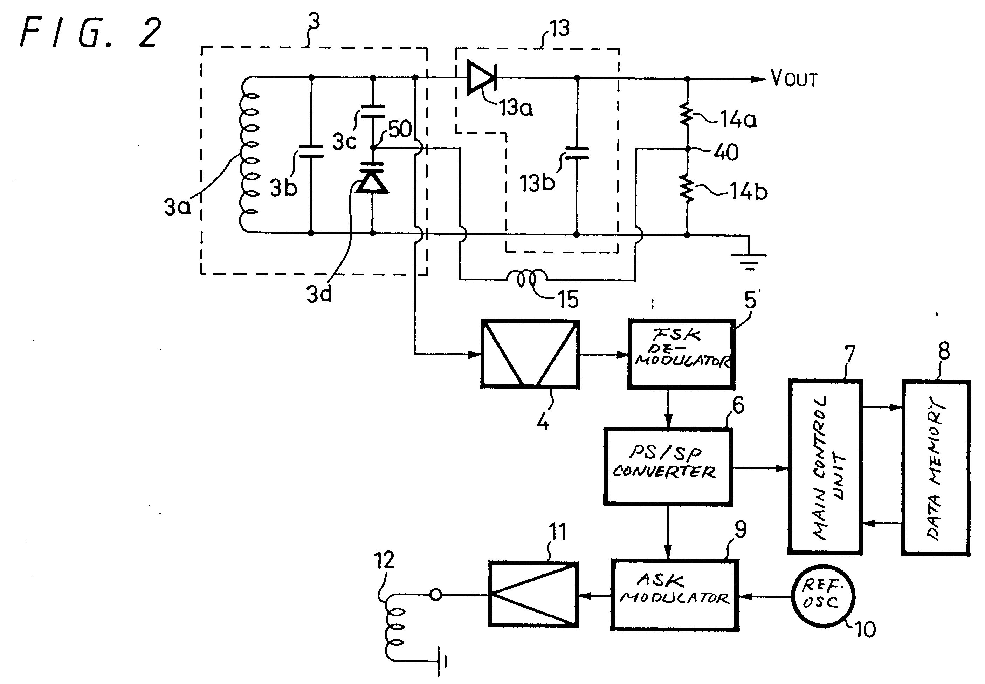

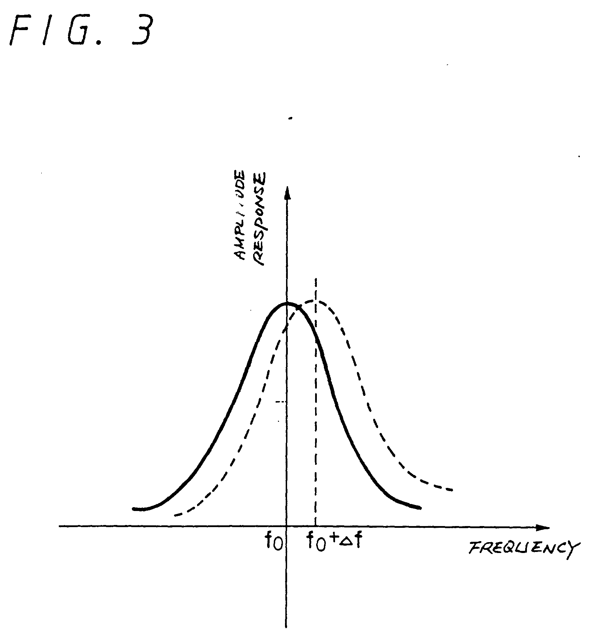

A non-contacting information card embodying the invention will now be described with reference to FIGS. 2 and 3. In FIG. 2, parts corresponding to like parts of FIG. 1 are designated by the same reference signs.

As shown in FIG. 2, there is provided the resonant circuit 3 which receives in an electromagnetic coupling fashion the FSK signal from the coil 32 forming the write head of the card reader/writer 2 shown in FIG. 1.

As shown in FIG. 2, the resonant circuit 3 is composed of a coil 3a, a capacitor 3b connected in parallel with the coil 3a, and a series circuit of a capacitor 3c and a vari-cap diode 3d which forms a variable capacity element and is connected in parallel with the coil 3a.

In this case, the cathode of the vari-cap diode 3d is connected to one side of the capacitor 3c and a voltage proportional to a power supply voltage, which will be described later, is supplied to the cathode of the vari-cap diode 3d as a reverse bias voltage.

When the power supply voltage is held at a predetermined value, the resonant frequency f₀ of the resonant circuit 3 is selected to be of such a value (e.g. 300 kHz) that the FSK signal from the coil 32 of the card reader/writer 2 is maximised by the electromagnetic coupling.

In this embodiment, the FSK signal obtained in the resonant circuit 3 is supplied through the band-pass filter 4 to the FSK demodulator 5. An information signal based on the digital signal obtained at the output side of the FSK demodulator 5 is converted from serial to parallel data form by the PS/SP converter 6 and then supplied to the main control unit 7 formed by the CPU.

The main control unit 7 supplies the data memory 8 with signals, such as a memory information signal and a read command signal. Therefore, data is written in or read out from the data memory 8 under the control of the main control unit 7.

The digital signal, which is the information signal read out from the data memory 8, is supplied to the main control unit 7. The digital signal, which is the information signal read out from the data memory 8 under the control of the main control unit 7, is converted from parallel to serial data form by the PS/SP converter 6 and then fed to the ASK modulator 9. The ASK modulator 9 is supplied with the carrier signal having the frequency f₀, e.g. 300 kHz, from the oscillator 10.

The ASK signal obtained at the output side of the ASK modulator 9 after the information signal has been read out from the data memory 8 is supplied through the amplifier 11 to the coil 12 which transmits the ASK signal to the coil 33 of the read head of the card reader/writer 2 shown in FIG. 1 by electromagnetic coupling.

According to this embodiment, the FSK signal obtained in the resonant circuit 3 is supplied to the rectifier 13, which is constituted by a rectifier diode 13a and a capacitor 13b. Then, the rectifier 13 generates a DC voltage at the output side thereof as a power supply voltage. This DC voltage is used as an operation voltage to operate the non-contacting information card.

According to this embodiment, a series circuit of resistors 14a and 14b is connected across the output side of the rectifier 13. The junction 40 between the resistors 14a and 14b is connected through a high frequency blocking coil 15 to the junction 50 between the capacitor 3c and the vari-cap diode 3d forming the resonant circuit 3.

Further, according to this embodiment, the non-contacting information card transmits and receives information between it and a card reader/writer by electromagnetic coupling in a manner which is similar to the card reader/writer 2 shown in FIG. 1.

Since the non-contacting information card 1 according to this embodiment is arranged as described above, when the card is located at the predetermined position with respect to the operation area of the card reader/writer 2, the rectifier 13 generates a predetermined voltage at its output side. Also, the resonant frequency of the resonant circuit 3 is selected to be the frequency f₀, which is determined depending an initial capacity value of the vari-cap diode 3d. Thus, electric power is given and received between the non-contacting information card 1 and the card reader/writer 2 at the resonant frequency f₀.

If the position of the non-contacting information card 1 is too close to the coil 32 of the card reader/writer 2, then the voltage obtained at the output side of the rectifier 13 increases. However, the vari-cap diode 3d is reverse biased by a voltage corresponding to the increased voltage so that the capacity of the vari-cap diode 3d decreases in correspondence therewith. As a consequence, the resonant frequency of the resonant circuit 3 increases in the direction shown by a dotted-line characteristic (resonance frequency f₀ + Δf) from a solid-line characteristic (resonance frquency f₀) shown in FIG. 3 to shift the resonance characteristic. Therefore, an electromagnetic coupling characteristic of the resonant circuit 3 becomes unsatisfactory and the output voltage of the resonance circuit 3 is lowered. Consequently, the DC voltage obtained at the output side of the rectifier 13 can be made substantially constant, regardless of the positional relationship between the coil 32 of the card reader/writer 2 and the non-contacting information card 1.

Therefore, according to this embodiment, it is possible to prevent the IC chip or the like disposed in the non-contacting information card from being destroyed by the excess voltage.

While the information signal is transmitted and received between the card reader/writer 2 and the non-contacting information card 1 in a conventional manner, according to this embodiment, the output signal of the resonant circuit 3 is constantly held at a substantially constant level. Therefore, according to this non-contacting information card, the information signal can be received satisfactorily and the signal processing can be carried out satisfactorily.

According to the above-described embodiment, a non-contacting information card of a relatively simple arrangement having a resonant circuit 3 including a variable capacitive element can prevent an IC chip or the like disposed within the non-contacting information card from being destroyed by excess voltage.

Furthermore, according to the above-described embodiment, since the non-contacting information card is of a relatively simple arrangement and does not need a large protecting element, the non-contacting information card can be made inexpensive.

## Claims

1. A non-contacting information card (1) including a resonant circuit (3) for receiving a carrier signal modulated on the basis of information supplied thereto from a card reader/writer (2), information processing means (5) for obtaining information from said carrier signal, and rectifier means (13) for rectifying said carrier signal to provide a voltage at an output side thereof for operating the non-contacting information card, characterised in that the resonant circuit (3) comprises a variable capacity element (3d) and a resonant frequency of the resonant circuit can be varied by varying the capacity of the variable capacitive element (3d) in response to a voltage proportional to the voltage at the output side of the rectifier means (13) thereby to make the voltage at the output side of the rectifier means substantially constant.

2. A non-contacting information card according to claim 1, wherein the variable capacity element (3d) is formed by a vari-cap diode and the vari-cap diode is reverse biased by the voltage proportional to the voltage obtained at the output side of the rectifier means (13).

3. A non-contacting information card according to claim 2, wherein said voltage proportional to the voltage at the output side of said rectifier means (13) is provided by a series circuit of resistors (14a, 14b) connected across said output side of said rectifier means (13) and a high frequency blocking coil (15) connected to a junction between said resistors (14a, 14b).

## Patentansprüche

1. Berührungslose Informationskarte (1) mit einem Resonanzkreis (3) für den Empfang eines Trägersignals, welches auf der Grundlage einer von einer Kartenlese-/-schreibeinrichtung (2) abgegebenen Information moduliert ist, mit einer Informationsverarbeitungseinrichtung (5) zur Erzielung einer Information aus dem genannten Trägersignal und mit einer Gleichrichtereinrichtung (13) zur Gleichrichtung des genannten Trägersignals für die Lieferung einer Spannung auf einer Ausgangsseite der betreffenden Gleichrichtereinrichtung zum Betrieb der berührungslosen Informationskarte,
**dadurch gekennzeichnet**, dass der Resonanzkreis (3) ein veränderbares Kapazitätselement (3d) aufweist und dass eine Resonanzfrequenz des Resonanzkreises durch Verändern der Kapazität des veränderbaren Kapazitätselements (3d) auf eine Spannung hin verändert werden kann, die proportional ist der Spannung auf der Ausgangsseite der Gleichrichtereinrichtung (13), derart, dass die Spannung auf der Ausgangsseite der Gleichrichtereinrichtung weitgehend konstant gemacht wird.

2. Berührungslose Informationskarte nach Anspruch 1, wobei das veränderbare Kapazitätselement (3d) durch eine Kapazitätsdiode gebildet ist und dass die Kapazitätsdiode in Sperrrichtung durch eine Spannung vorgespannt ist, die proportional ist der Spannung, die auf der Ausgangsseite der Gleichrichtereinrichtung (13) erhalten wird.

3. Berührungslose Informationskarte nach Anspruch 2, wobei die genannte Spannung, die der Spannung auf der Ausgangsseite der genannten Gleichrichtereinrichtung (13) proportional ist, durch eine Reihenschaltung aus Widerständen (14a, 14b), die mit der Ausgangsseite der Gleichrichtereinrichtung (13) verbunden sind, und einer Hochfrequenz-Sperrspule (15) bereitgestellt wird, welche an einem Verbindungspunkt zwischen den betreffenden Widerständen (14a, 14b) angeschlossen ist.

## Revendications

1. Carte d'information sans contact (1) qui inclut un circuit résonant (3) pour recevoir un signal de porteuse qui est modulé sur la base d'une information qui est appliquée dessus depuis un dispositif de lecture/écriture de carte (2), un moyen de traitement d'information (5) pour obtenir une information à partir dudit signal de porteuse et un moyen de redresseur (13) pour redresser ledit signal de porteuse afin de produire une tension au niveau d'un côté de sortie afférent pour faire fonctionner la carte d'information sans contact, caractérisée en ce que le circuit résonant (3) comprend un élément de capacité variable (3d), et une fréquence de résonance du circuit résonant peut être modifiée en faisant varier la capacité de l'élément de capacité variable (3d) en réponse à une tension qui est proportionnelle à la tension au niveau du côté de sortie du moyen de redresseur (13), ceci afin de rendre sensiblement constante la tension au niveau du côté de sortie du moyen de redresseur.

2. Carte d'information sans contact selon la revendication 1, dans laquelle l'élément de capacité variable (3d) est formé par une diode varicap et la diode varicap est polarisée en sens inverse par la tension qui est proportionnelle à la tension obtenue au niveau du côté de sortie du moyen de redresseur (13).

3. Carte d'information sans contact selon la revendication 2, dans laquelle ladite tension qui est proportionnelle à la tension au niveau du côté de sortie du moyen de redresseur (13) est fournie par un circuit série de résistances (14a, 14b) qui est connecté entre les bornes dudit côté de sortie dudit moyen de redresseur (13) et par une bobine de blocage haute fréquence (15) qui est connectée à une jonction entre lesdites résistances (14a, 14b).
